# EUROPÄISCHE PATENTSCHRIFT

(11) **EP 3 377 348 B1**
(45) Veröffentlichungstag und Bekanntmachung des Hinweises auf die Patenterteilung: **17.06.2020**
(21) Anmeldenummer: 16788026.9
(22) Anmeldetag: 28.10.2016
(51) Int. Cl.: B60J 7/12, B60J 7/057, B60J 7/02

(54) **SCHUB- UND/ODER ZUGVORRICHTUNG FÜR EIN FAHRZEUGVERDECK UND VERDECK FÜR EIN ÖFFNUNGSFÄHIGES FAHRZEUGDACH**
PUSHING AND/OR PULLING DEVICE FOR A VEHICLE TOP AND TOP FOR AN OPENABLE VEHICLE ROOF
DISPOSITIF DE POUSSÉE ET/OU DE TRACTION POUR CAPOTE DE VÉHICULE ET CAPOTE POUR TOIT OUVRANT DE VÉHICULE

(30) Priorität: 20.11.2015 DE 102015015064
(43) Veröffentlichungstag der Anmeldung: 26.09.2018
(73) Patentinhaber: Audi AG, 85045 Ingolstadt (DE)
(72) Erfinder: DILLINGER, Andreas, 93309 Kelheim (DE)
(86) Internationale Anmeldenummer: PCT/EP2016/001806
(87) Internationale Veröffentlichungsnummer: WO 2017/084739

(56) Entgegenhaltungen:
- EP-A1- 2 977 247
- EP-A2- 1 859 977
- WO-A1-03/071158
- DE-A1-102012 002 298

## Beschreibung

Die Erfindung betrifft eine Schub- und/oder Zugvorrichtung für ein Fahrzeugverdeck gemäß der Gattung des Patentanspruchs 1 und ein korrespondierendes Verdeck für ein öffnungsfähiges Fahrzeugdach mit einer solchen Schub- und/oder Zugvorrichtung.

Verdecke für öffnungsfähige Fahrzeugdächer sind in zahlreichen Variationen bekannt. Üblicherweise weisen die Verdecke mindestens zwei Verdeckabschnitte auf, wobei ein vorderer erster Verdeckabschnitt mit einem Windschutzscheibenquerträger koppelbar ist und ein hinterer zweiter Verdeckabschnitt eine flächige Heckscheibe aufweist. Diese Verdecke werden meist über einen Drehpunkt bewegt, wobei das Verdeck hoch über dem Fahrzeug bewegt wird. Dadurch ist ein enormer Kraftaufwand erforderlich und somit auch robuste und schwere Antriebsmechaniken und Antriebe. Die Faltung des Verdecks wird beispielsweise durch Scherengelenke gewährleistet. Alternativ zur Ausführung mit einem Drehpunkt kann ein Verdeckabschnitt zwischen Längsträgern des Fahrzeugdachs geführt werden. Das bedeutet, dass mindestens ein Verdeckabschnitt verschiebbar ausgeführt ist.

Aus der DE 197 04 846 A1 ist ein Verdeck für ein motorisiertes puristisches Personenkleinfahrzeug bekannt, welche insbesondere als so genannte Roadster oder Speedster ausgeführt sind. Bei diesen Personenkleinfahrzeugen ist ein Verdeckmittelteil an einem Heckteil zwischen einer zwischen Sitzpositionen abgesenkten Stellung und einer an einer Oberkante einer Windschutzscheibe abgestützten angehobenen Stellung schwenkbar gelagert. Zwei von dem Verdeckmittelteil geführte zusammenschiebbare Abdeckungen sind in der angehobenen Stellung des Verdeckmittelteils beidseitig aus einer verdeckten hinter den Sitzpositionen liegenden Stellung nach vorne über die Sitzpositionen schiebbar.

Aus der DE 101 20 358 A1 ist ein Fahrzeug mit einem Verdeck für ein öffnungsfähiges Dach bekannt. Das Fahrzeug weist zwei entfernbare seitliche Dachrahmen mit rückwärts sich daran anschließenden C-Säulen auf. Ein verschiebbares Dachelement, insbesondere ein Faltschiebdach oder ein Lamellendach, ist in Führungen der seitlichen Dachrahmen aufgenommen. Ein flächiges hinteres Dachelement, insbesondere eine Heckscheibe, ist schwenkbar an der Karosserie gelagert. Das verschiebbare Dachelement ist in einer vollständig geöffneten hinteren Endstellung in einem dem flächigen Dachelement zugeordneten Aufnahmebereich aufgenommen.

Aus der DE 10 2004 003 021 A1 ist ein Cabriolet-Fahrzeug mit einem zumindest bereichsweise mit einem flexiblen Bezug versehenen öffnungsfähigen Dach bekannt, das in seinem vorderen Dachbereich einen vom Bezug übergriffenen starren Endbereich umfasst. Der vordere Dachbereich ist in gleicher Orientierung wie im geschlossenen Dachzustand in einer Karosserieausnehmung ablegbar, d.h., dass die bei geschlossenem Dach nach oben außen zeigende Fläche des vorderen Dachbereichs auch im geöffneten Zustand des Dachs nach oben weist. Das Dach kann hierfür in einer so genannten Z-Faltung abgelegt werden, wobei sich der Bezug Z-Förmig mit einem oberen Abschnitt über der Dachspitze und einem unteren Abschnitt um die Heckscheibe und einem diese diagonal verbindenden Zwischenabschnitt ablegt. Der vordere Dachbereich umfasst weiter einen längsverlagerbaren Zusatzträger, der unterhalb des Bezugs angeordnet ist und gegenüber diesem über ein Zug-Schub-Gestänge relativbeweglich ist.

Aus der EP 1 859 977 A2 ist eine Anordnung zum Bewegen von Jalousien und dergleichen, insbesondere in Kraftfahrzeugen bekannt, welche einen Stützkörper umfasst, welchem eine feststehende Struktur zugeordnet werden kann, und welcher eine Einrichtung zum Zusammenfassen einer verbundenen Jalousie aufweist, welche an ihrem freien Ende eine Stange aufnimmt, die von stabförmigen Mitteln getragen wird. Die stabförmigen Mittel sind flexibel, wenn sie geführt werden, und im Wesentlichen starr, wenn sie lose sind. Die stabförmigen Mittel wirken mit Antriebsmitteln zusammen, die im Stützkörper vorgesehen sind und durch einen Motor betätigt werden. Die stabförmigen Mittel werden mittels Platten gebildet, welche im Wesentlichen polygonal vorzugsweise rechteckig sind und einen oder mehrere Schlitze für den Durchgang von einem oder zwei flexiblen Laminaten ausbilden. Die Platten haben Zentrierstifte auf einer Seite und Zentriersitze auf der anderen Seite, um eine gegenseitige Kopplung vorzusehen, wenn die Platten nebeneinander liegen. An einer Seite, die parallel zur Ebene der Anordnung der Platten ist, ist eine Ausnehmung vorgesehen, die wie ein Umfangsabschnitt geformt ist, während an der gegenüberliegenden Kante eine Abschrägung definiert ist. Die Platten sind aneinander angrenzend so angeordnet, dass die Aussparung abwechselnd an einer Kante und an der gegenüberliegenden Kante vorgesehen ist, so dass an den beiden gegenüberliegenden Kanten der beiden eine Vielzahl von Aussparungen vorgesehen sind, die in der Praxis eine Vielzahl von Sitzen für die stabartigen Mittel definieren.

Aus der WO 03/071158 A1 ist ein Stellglied bekannt, welches eine Reihe von Elementen, die jeweils zum nächsten schwenkbar sind, und ein Gehäuse umfasst, in dem mindestens ein Teil der Reihe von Elementen untergebracht ist, wobei ein Ende der Reihe frei über einen Ausgang des Gehäuses vorsteht. Die Elemente werden so geführt, dass sie einem gekrümmten Pfad zum Gehäuseausgang folgen, und werden von einem Antriebsmechanismus entlang des Wegs angetrieben, um die Gesamtlänge der über den Ausgang hinausragenden Elemente zu variieren. Die vorspringenden Elemente werden in einer im Wesentlichen starren, selbsttragenden Säule durch einen Zahnriemen in linearer Ausrichtung gehalten, der nach und nach mit den Elementen in Eingriff steht, wenn sie aus dem Gehäuseausgang austreten.

Aus der EP 2 977 247 A1 ist ein gattungsgemäßes Verdeck für ein öffnungsfähiges Fahrzeugdach bekannt, welches mindestens zwei Verdeckabschnitte aufweist. Hierbei ist ein vorderer erster Verdeckabschnitt mit einem Windschutzscheibenquerträger koppelbar und mindestens ein Verdeckabschnitt ist verschiebbar ausgeführt und ein hinterer zweiter Verdeckabschnitt ist schwenkbar und/oder absenkbar ausgeführt. Ein dritter Verdeckabschnitt ist flexibel ausgeführt und zwischen dem ersten Verdeckabschnitt und zweiten Verdeckabschnitt angeordnet und durch eine gattungsgemäße selbsttragende Schub- und/oder Zugvorrichtung angetrieben, wobei der dritte Verdeckabschnitt bei einem Öffnungsvorgang derart über den hinteren zweiten Verdeckabschnitt faltbar ist, dass nach dem Faltvorgang eine Außenseite des dritten Verdeckabschnitts einer Außenseite des zweiten Verdeckabschnitts zugewandt ist. Der vordere erste Verdeckabschnitt ist mit der Schub- und/oder Zugvorrichtung gekoppelt, welche den ersten Verdeckabschnitt im Wesentlichen entlang der Fahrzeuglängsrichtung bewegt. Die Schub- und/oder Zugvorrichtung ist mit einem einer Fahrzeugfont zugewandten Endbereich des ersten Verdeckabschnitts verbunden und schleppt den ersten Verdeckabschnitt mit dem dritten Verdeckabschnitt beim Öffnen des Verdecks in Richtung Fahrzeugheck und beim Schließen des Verdecks in Richtung Fahrzeugfront. Die Schub- und/oder Zugvorrichtung umfasst beispielsweise zwei Ketten mit mehreren Schub- und/oder Zugelementen, welche in einer im Bereich des zweiten Verdeckabschnitts angeordneten Führung geführt sind. Die beiden Ketten verlaufen jeweils an den seitlichen Rändern des Verdecks. Jeweils zwei benachbarte Schub- und/oder Zugelemente sind über ein Drehgelenk miteinander verbunden, wobei die Drehachsen der Schub- und/oder Zugelemente parallel zur Dachebene verlaufen. Zudem sind zwei benachbarte Schub- und/oder Zugelemente durch Verriegelungsmittel gegeneinander verriegelbar.

Die Aufgabe der Erfindung ist es, eine Schub- und/oder Zugvorrichtung für ein Fahrzeugverdeck sowie ein Verdeck für ein öffnungsfähiges Fahrzeugdach mit einer solchen Schub- und/oder Zugvorrichtung anzugeben, welche mehrere Verdeckabschnitte des öffnungsfähigen Fahrzeugdachs mit einem geringen Kraftaufwand zwischen einer geschlossenen Gebrauchslage und einer nichtsichtbaren Nichtgebrauchslage bewegen kann und in der Nichtgebrauchslage einen geringeren Stauraum als übliche Schub- und/oder Zugkonstruktionen einnimmt.

Erfindungsgemäß wird die Aufgabe durch Bereitstellung einer Schub- und/oder Zugvorrichtung für ein Fahrzeugverdeck mit den Merkmalen des Patentanspruchs 1 und eines Verdecks für ein öffnungsfähiges Fahrzeugdach mit den Merkmalen des Patentanspruchs 13 gelöst. Vorteilhafte Ausführungsformen und Weiterbildungen der Erfindung sind in den abhängigen Ansprüchen angegeben.

Um eine Schub- und/oder Zugvorrichtung für ein Fahrzeugverdeck für ein Fahrzeug bereitzustellen, welche mehrere Verdeckabschnitte des öffnungsfähigen Fahrzeugdachs mit einem geringen Kraftaufwand zwischen einer geschlossenen Gebrauchslage und einer nichtsichtbaren Nichtgebrauchslage bewegen kann und in der Nichtgebrauchslage einen geringeren Stauraum als übliche Schub- und/oder Zugkonstruktionen einnimmt, sind zwei Gliederketten vorgesehen, welche jeweils mehrere Gliederelemente aufweisen und mit einem vorgegebenen Abstand zu einander verlaufen. Die Gliederketten sind jeweils an einem Ende in einer Führung geführt, welche eine Bewegungsrichtung und den Abstand der Gliederketten zueinander vorgeben, und am anderen Ende über eine Querverbindung miteinander verbunden, so dass die Gliederketten beim Verlassen der Führung in einer gemeinsamen Ebene verlaufen. Zudem sind zwei benachbarte Gliederelemente der Gliederketten jeweils über ein Gelenk beweglich miteinander verbunden, so dass zumindest ein Teil der Gliederelemente beim Einfahren der Gliederketten in die jeweilige Führung in einer korrespondierenden Ablage abgelegt werden, wobei die benachbarten Gliederelemente beim Verlassen der jeweiligen Führung an einander anliegen und sich gegen einander abstützen. Hierbei weisen Schwenkachsen zwischen zwei benachbarten Gliederelementen der jeweiligen Gliederkette einen vorgegebenen Neigungswinkel zu der gemeinsamen Ebene auf, wobei die Schwenkachsen der beiden Gliederketten gegeneinander geneigt sind, so dass die Gliederketten freitragend in die vorgegebene Bewegungsrichtung verlaufen und sich gegenseitig gegen andere Bewegungsrichtungen blockieren.

Durch die beschriebene Ausrichtung der Schwenkachsen der benachbarten Gliederelemente ist eine freitragende Schub- und/oder Zugvorrichtung mit zwei Gliederketten darstellbar, welche sich im entspannten bzw. flexiblen Zustand einfach aufrollen und/oder in einer Ablage verstauen lassen. Die freitragende Wirkung wird durch den über die Querverbindung an einem Ende der Gliederketten vorgegebenen Abstand bzw. den beim Verlassen der jeweiligen Führung vorliegenden Abstand zwischen den Gliederketten, welcher eine gegenseitig Abstützung der Gliederketten gegeneinander bewirkt, und die sich nach Verlassen der Führung gegenseitig abstützenden benachbarten Gliederelemente der jeweiligen Gliederkette erzeugt.

Die benachbarten Gliederelemente der jeweiligen Gliederketten sind so miteinander verbunden, dass sie nur um eine vorgegebene Schwenkachse zueinander verschwenkt werden können. Das bedeutet, dass sich die benachbarten Gliederelemente einer ersten Gliederkette jeweils nur um eine erste Schwenkachse verschwenken können, und sich dadurch die erste Gliederkette auch nur um diese ersten Schwenkachsen zwischen benachbarten Gliederelementen abwinkeln kann. Die benachbarten Gliederelemente einer zweiten Gliederkette können sich ebenfalls jeweils nur um eine zweite Schwenkachse verschwenken, so dass sich die zweite Gliederkette auch nur um diese zweiten Schwenkachsen zwischen benachbarten Gliederelementen abwinkeln kann. Die benachbarten Gliederelemente der Gliederketten versteifen sich gegeneinander, wenn eine Kraft in die Gegenrichtung der jeweiligen Schwenkachse wirkt, da sich die benachbarten Gliederelemente berühren und so ein Abwinkeln verhindern. Durch die gegeneinander gerichteten Schwenkachsen der ersten Gliederkette und der zweiten Gliederkette, blockiert die erste Gliederkette durch den vorgegebenen Abstand ein Abwinkeln der zweiten Gliederkette um die zweiten Schwenkachsen, und die zweite Gliederkette blockiert durch den vorgegebenen Abstand ein Abwinkeln der ersten Gliederkette um die ersten Schwenkachsen.

Zusammenfassend werden die beiden Gliederketten bzw. deren Schwenkachsen gegensätzlich gekippt und am freien Ende über die Querverbindung mit einem vorgegebenen Abstand mit einander verbunden und verlassen die Führung mit einem vorgegebenen Abstand zueinander. Dadurch versteifen sich die beiden Gliederketten im Querschnitt zu einem "V" oder einem umgekehrten "V" oder einem U. Somit ist es möglich, ein auf den verbundenen Enden der Gliederketten angeordnetes Element freitragend aus der Führung herauszuschieben, ohne dass dieses die vorgegebene Richtung verlassen kann.

Das Gelenk zwischen zwei benachbarten Gliederelementen kann beispielsweise als Scharnier dargestellt werden, welches sich "nur" wie ein Schwenkflügel bewegen kann. Es ist aber auch vorstellbar, dass das Gelenk ein Verdrehen der benachbarten Gliederelemente im abgelegten Zustand zulässt und beispielsweise als Kugelgelenk ausgeführt ist. In diesem Fall werden die sich berührenden Flächen der benachbarten Gliederelemente so geformt, dass sie sich bei Berührung gegenseitig führen. Dies kann beispielsweise durch ein "Nut- und Federsystem" dargestellt werden, welches korrespondierende Aussparungen und Überstände aufweist. Durch die bewegliche Verbindung zwischen zwei benachbarten Gliederelementen kann die Bewegungsfreiheit der beiden Gliederketten in vorteilhafter Weise erhöht werden und die Gliederketten können platzsparend in der Ablage abgelegt werden.

Des Weiteren wird ein Verdeck für ein öffnungsfähiges Fahrzeugdach vorgeschlagen, welches mehrere Verdeckabschnitte und eine erfindungsgemäße Schub- und/oder Zugvorrichtung aufweist, welche die Verdeckabschnitte von einer Gebrauchslage in eine Nichtgebrauchslage bewegt.

In vorteilhafter Ausgestaltung der erfindungsgemäßen Schub- und/oder Zugvorrichtung können die Neigungswinkel der Schwenkachsen zur gemeinsamen Ebene jeweils in einem Wertebereich größer als 0° und kleiner als 180° vorgegeben werden. Vorzugsweise werden die Neigungswinkel in einem Wertbereich zwischen 45° und 135° gewählt.

In weiterer vorteilhafter Ausgestaltung der erfindungsgemäßen Schub- und/oder Zugvorrichtung kann das Gelenk als Scharnier mit einer fest vorgegebenen Schwenkachse oder als Kugelgelenk mit variablen Schwenkachsen ausgeführt werden. Die Ausführung als Scharnier ermöglicht eine besonders einfache und kostengünstige Realisierung der Schub- und/oder Zugvorrichtung, während die Ausführung als Kugelgelenk eine bessere Anpassung der Schub- und/oder Zugvorrichtung an die gegebene Einbauumgebung erlaubt. Die über ein Kugelgelenk verbundenen benachbarten Gliederelemente können zusätzliche Führungskonturen aufweisen, welche die benachbarten Gliederelemente beim Verlassen der jeweiligen Führung gegeneinander abstützen. Hierbei kann eine erste Führungskontur beispielsweise als Vertiefung und eine zweite Führungskontur als Erhöhung ausgeführt werden.

In weiterer vorteilhafter Ausgestaltung der erfindungsgemäßen Schub- und/oder Zugvorrichtung kann die Führung mindestens ein mit einem Antrieb gekoppeltes Antriebselement aufweisen, welches die jeweilige Gliederkette bewegen kann. Das mindestens eine Antriebselement kann beispielsweise als Zugseil oder Zahnrad oder Reibrad oder Schneckenrad oder Gurt ausgeführt werden.

In weiterer vorteilhafter Ausgestaltung der erfindungsgemäßen Schub- und/oder Zugvorrichtung kann die Führung einen lasttragenden Endabschnitt und einen Verbindungsabschnitt umfassen, welcher eine Kurvenbahn für die korrespondierende Gliederkette zwischen dem lasttragenden Endabschnitt und der Ablage vorgeben kann. Vorzugsweise können der lasttragende Endabschnitt und/oder der Verbindungsabschnitt und/oder die Ablage als kostengünstige Führungsschienen ausgeführt werden, welche innerhalb der Gliederelemente angeordnet sind. Dadurch können die Gliederelemente den lasttragenden Endabschnitt und/oder den Verbindungsabschnitt und/oder die Ablage ganz oder teilweise umschließen, so dass die Führung nicht sichtbar ist und auch keine sichtbaren Spuren der Gliederkette an der Außenseite erzeugt werden können.

In weiterer vorteilhafter Ausgestaltung der erfindungsgemäßen Schub- und/oder Zugvorrichtung können der lasttragende Endabschnitt und/oder der Verbindungsabschnitt und/oder die Ablage als Führungsschienen ausgeführt werden, welche die Gliederelemente aufnehmen können.

In weiterer vorteilhafter Ausgestaltung der erfindungsgemäßen Schub- und/oder Zugvorrichtung können die Gliederelemente jeweils mindestens ein Führungselement aufweisen, welches vor dem Verlassen der Führung im lasttragenden Endabschnitt geführt ist. Der lasttragende Endabschnitt der Führung ermöglicht, dass die jeweiligen Gliederelemente in der Führung gehalten werden und aus dem "abgewinkelten" Verbindungsabschnitt so aufgenommen werden, dass sie das jeweilige in Richtung Querverbindung benachbarte Gliederelement berühren. Dies kann insbesondere über mehrere richtig platzierte Reibräder, Zahnräder oder ähnliches gewährleistet werden.

In weiterer vorteilhafter Ausgestaltung der erfindungsgemäßen Schub- und/oder Zugvorrichtung können einzelne Gliederelemente der jeweiligen Gliederkette gleiche oder unterschiedliche Abmessungen und/oder Formen aufweisen. Dadurch kann die Schub- und/oder Zugvorrichtung in vorteilhafter Weise einfach an verschiedene gewünschte Ausführungsformen des Verdecks angepasst werden.

In vorteilhafter Ausgestaltung des erfindungsgemäßen Verdecks kann ein vorderer Verdeckabschnitt als starre Dachspitze ausgeführt werden, welche über mindestens ein Mittelteil mit einem hinteren starren Verdeckabschnitt verbunden werden kann, welcher eine Heckscheibe aufweisen kann.

In weiterer vorteilhafter Ausgestaltung des erfindungsgemäßen Verdecks kann der vordere Verdeckabschnitt die Querverbindung zwischen den beiden Gliederketten ausbilden. Zudem kann der vordere Verdeckabschnitt in der Nichtgebrauchslage oberhalb oder unterhalb des hinteren starren Verdeckabschnitts angeordnet werden.

In weiterer vorteilhafter Ausgestaltung des erfindungsgemäßen Verdecks kann an den Gliederelementen jeweils eine Scheibendichtung mit einem Aufnahmeschlitz angeordnet werden, in welchen ein freier Rand einer Seitenscheibe einfahren kann.

Ausführungsbeispiele der Erfindung sind in der Zeichnung dargestellt und werden in der nachfolgenden Beschreibung näher erläutert. In der Zeichnung bezeichnen gleiche Bezugszeichen Komponenten bzw. Elemente, die gleiche bzw. analoge Funktionen ausführen. Dabei zeigen:
- Fig. 1: eine schematische Darstellung eines Ausführungsbeispiels einer erfindungsgemäßen Schub- und/oder Zugvorrichtung für ein Fahrzeugverdeck in einer Gebrauchslage,
- Fig. 2: eine schematische Darstellung der erfindungsgemäßen Schub- und/oder Zugvorrichtung aus Fig. 1 in einer Nichtgebrauchslage,
- Fig. 3: eine schematische Seitenansicht eines oberen Abschnitts eines Fahrzeugs mit einer schematischen Darstellung des Verlaufs einer Führung der erfindungsgemäßen Schub- und/oder Zugvorrichtung aus Fig. 1,
- Fig. 4: eine schematische Darstellung eines Ausführungsbeispiels eines Gelenks zwischen zwei benachbarten Gliederelementen der erfindungsgemäßen Schub- und/oder Zugvorrichtung, und
- Fig. 5: eine schematische Darstellung eines weiteren Ausführungsbeispiels eines Gelenks zwischen zwei benachbarten Gliederelementen der erfindungsgemäßen Schub- und/oder Zugvorrichtung, und
- Fig. 6: eine schematische Schnittdarstellung der an einander anliegenden benachbarten Gliederelemente aus Fig. 5.
- Fig. 7: eine schematische Schnittdarstellung der erfindungsgemäßen Schub- und/oder Zugvorrichtung,
- Fig. 8: eine schematische Schnittdarstellung eines Ausführungsbeispiels eines Gliederelements der erfindungsgemäßen Schub- und/oder Zugvorrichtung,
- Fig. 9: eine schematische Schnittdarstellung eines weiteren Ausführungsbeispiels eines Gliederelements der erfindungsgemäßen Schub- und/oder Zugvorrichtung,

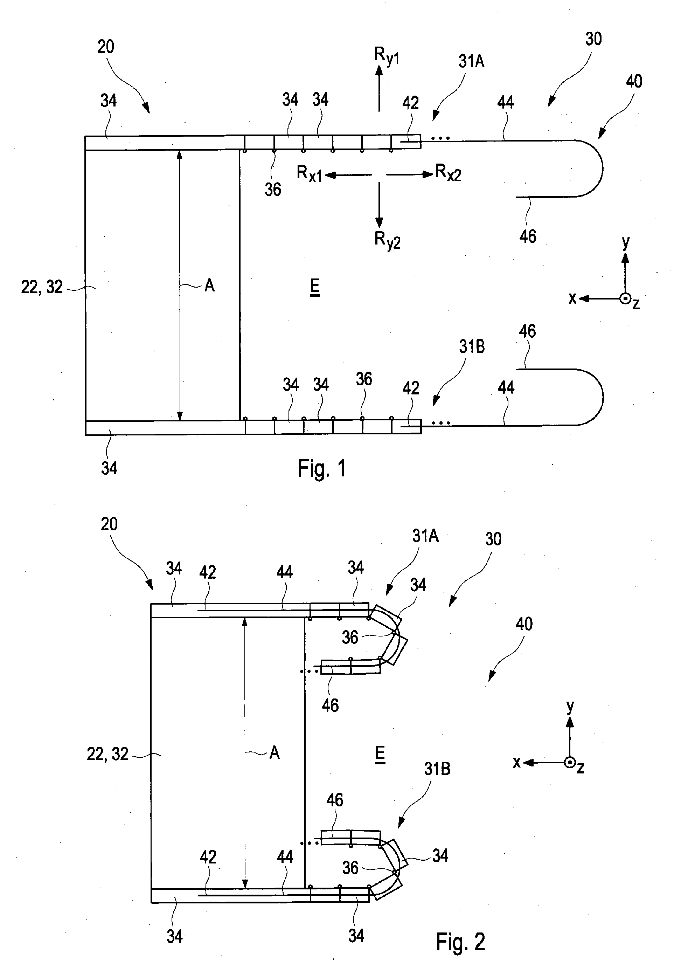

Wie aus Fig. 1 bis 9 ersichtlich ist, umfassen Ausführungsbeispiele einer erfindungsgemäßen Schub- und/oder Zugvorrichtung 30 für ein Fahrzeugverdeck 20 jeweils zwei Gliederketten 31A, 31B, welche jeweils mehrere Gliederelemente 34, 34A, 34B aufweisen und mit einem vorgegebenen Abstand A zu einander verlaufen. Die Gliederketten 31A, 31B sind jeweils an einem Ende in einer Führung 40 geführt, welche eine Bewegungsrichtung Rₓ₁, Rₓ₂ und den Abstand A der Gliederketten 31A, 31B zueinander vorgeben, und am anderen Ende über eine Querverbindung 32 miteinander verbunden, so dass die Gliederketten 31A, 31B beim Verlassen der Führung 40 in einer gemeinsamen Ebene E verlaufen. Hierbei sind zwei benachbarte Gliederelemente 34, 34A, 34B der Gliederketten 31A, 31B jeweils über ein Gelenk 36, 36A, 36B beweglich miteinander verbunden, so dass zumindest ein Teil der Gliederelemente 34, 34A, 34B beim Einfahren der Gliederketten 31A, 31B in die jeweilige Führung 40 in einer korrespondierenden Ablage 46 abgelegt sind. Die benachbarten Gliederelemente 34, 34A, 34B liegen beim Verlassen der jeweiligen Führung 40 an einander an und stützen sich gegen einander ab. Erfindungsgemäß weisen Schwenkachsen A_{Sa}, A_{Sb} zwischen zwei benachbarten Gliederelementen 34, 34A, 34B der jeweiligen Gliederkette 31A, 31B einen vorgegebenen Neigungswinkel aₐ, a_{b} zu der gemeinsamen Ebene E auf. Hierbei sind die Schwenkachsen A_{Sa}, A_{Sb} der beiden Gliederketten 31A, 31B gegeneinander geneigt, so dass die Gliederketten 31A, 31B freitragend in die vorgegebene Bewegungsrichtung Rₓ₁, Rₓ₂ verlaufen und sich gegenseitig gegen andere Bewegungsrichtungen R_{y1}, R_{y2}, R_{z1}, R_{z2} blockieren.

Die vorgegebene Bewegungsrichtungen Rₓ₁, Rₓ₂ verlaufen bei den dargestellten Ausführungsbeispielen im Wesentlichen parallel zur Fahrzeuglängsrichtung x. Die blockierten Bewegungsrichtungen R_{y1}, R_{y2}, R_{z1}, R_{z2} verlaufen parallel zur Fahrzeugquerrichtung y und zur Fahrzeughochrichtung.

Durch die beschriebene Ausrichtung der Schwenkachsen A_{Sa}, A_{Sb} der benachbarten Gliederelemente 34, 34A, 34B ist eine freitragende Schub- und/oder Zugvorrichtung 30 mit zwei Gliederketten 31A, 31B darstellbar, welche sich im entspannten bzw. flexiblen Zustand einfach aufrollen und/oder in einer Ablage 46 verstauen lassen. Die freitragende Wirkung wird durch den über die Querverbindung 32 an einem Ende der Gliederketten 31A, 31B vorgegebenen Abstand A bzw. den beim Verlassen der jeweiligen Führung 40 vorliegenden Abstand zwischen den Gliederketten 31A, 31B, welcher eine gegenseitig Abstützung der Gliederketten 31A, 31B gegeneinander bewirkt, und die sich nach Verlassen der Führung 40 gegenseitig abstützenden benachbarten Gliederelementen 34, 34A, 34B der jeweiligen Gliederkette 31A, 31B erzeugt.

Wie aus Fig. 1 bis 3 weiter ersichtlich ist, umfasst das dargestellte Fahrzeug an beiden Fahrzeugseiten einen hinteren Dachholm 2, eine Windschutzscheibe 4 1 und ein öffnungsfähiges Fahrzeugdach mit einem erfindungsgemäßen Verdeck 20. Das Verdeck umfasst mehrere Verdeckabschnitte und eine Schub- und/oder Zugvorrichtung 30, welche die Verdeckabschnitte von einer in Fig. 1 dargestellten Gebrauchslage in eine in Fig. 2 dargestellten Nichtgebrauchslage bewegt. Wie aus Fig. 1 bis 3 weiter ersichtlich ist, ist ein vorderer Verdeckabschnitt 22 als starre Dachspitze ausgeführt, welche über mindestens ein nicht näher dargestelltes Mittelteil mit einem hinteren starren Verdeckabschnitt 26 verbunden ist, welches eine Heckscheibe aufweist. Wie aus Fig. 1 und 2 weiter ersichtlich ist, bildet der vordere Verdeckabschnitt 22 die Querverbindung 32 zwischen den beiden Gliederketten 31A, 31B aus. Hierbei kann der vordere Verdeckabschnitt 22 in der Nichtgebrauchslage oberhalb oder unterhalb des hinteren starren Verdeckabschnitts 26 angeordnet werden.

Die benachbarten Gliederelemente 34, 34A, 34B der jeweiligen Gliederkette 31A, 31B sind so miteinander verbunden, dass sie nur um eine vorgegebene Schwenkachse A_{Sa}, A_{Sb} zueinander verschwenkt werden können. Das bedeutet, dass sich die benachbarten Gliederelemente 34, 34A, 34B einer ersten Gliederkette 31A jeweils nur um eine erste Schwenkachse Asa verschwenken können, und sich dadurch die erste Gliederkette 31A auch nur um diese ersten Schwenkachsen Asa zwischen benachbarten Gliederketten 31A, 31B abwinkeln kann. Die benachbarten Gliederelemente 34, 34A, 34B einer zweiten Gliederkette 31B können sich ebenfalls jeweils nur um eine zweite Schwenkachse A_{Sb} verschwenken, so dass sich die zweite Gliederkette 31B auch nur um diese zweiten Schwenkachsen A_{Sb} zwischen benachbarten Gliederelementen 34, 34A, 34B abwinkeln kann. Die benachbarten Gliederelemente 34, 34A, 34B der Gliederketten 31A, 31B versteifen sich gegeneinander, wenn eine Kraft in die Gegenrichtung der jeweiligen Schwenkachse A_{Sa}, A_{Sb} wirkt, da sich die benachbarten Gliederelemente 34, 34A, 34B berühren und so ein Abwinkeln verhindern. Durch die gegeneinander gerichteten Schwenkachsen A_{Sa}, A_{Sb} der ersten Gliederkette 31A und der zweiten Gliederkette 31B, blockiert die erste Gliederkette 31A durch den vorgegebenen Abstand A ein Abwinkeln der zweiten Gliederkette 31B um die zweiten Schwenkachsen A_{Sb}, und die zweite Gliederkette 31B blockiert durch den vorgegebenen Abstand A ein Abwinkeln der ersten Gliederkette 31A um die ersten Schwenkachsen A_{Sa}.

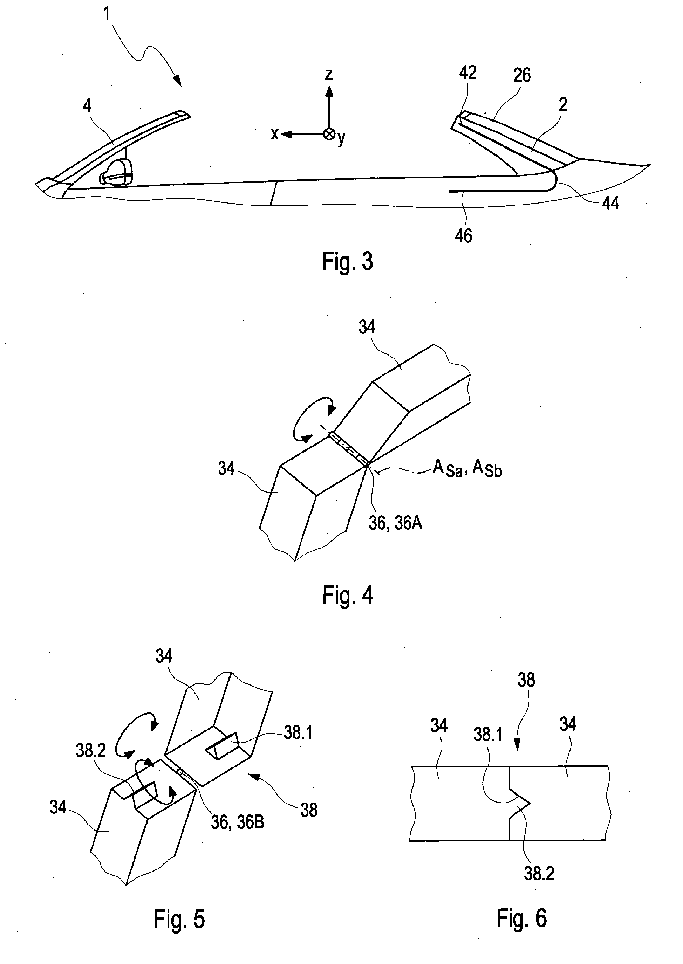

Wie aus Fig. 4 weiter ersichtlich ist, ist das Gelenk 36 im dargestellten Ausführungsbeispiel als kostengünstiges Scharnier 36A mit einer fest vorgegebenen Schwenkachse A_{Sa}, A_{Sb} ausgeführt.

Wie aus Fig. 5 und 6 weiter ersichtlich ist, ist das Gelenk 36 im dargestellten Ausführungsbeispiel als Kugelgelenk 36B mit variablen Schwenkachsen ausgeführt. Bei dieser Ausführungsform weisen die über das Kugelgelenk 36B verbundenen benachbarten Gliederelemente 34 Führungskonturen 38.1, 38.2 auf, welche die benachbarten Gliederelemente 34 beim Verlassen der jeweiligen Führung 40 gegeneinander abstützen. Im dargestellten Ausführungsbeispiel ist eine erste Führungskontur 38.1 als Vertiefung mit dreieckigem Querschnitt, und eine zweite Führungskontur 38.2 ist als Erhöhung mit korrespondierendem dreieckigem Querschnitt ausgeführt und wird von der Vertiefung aufgenommen.

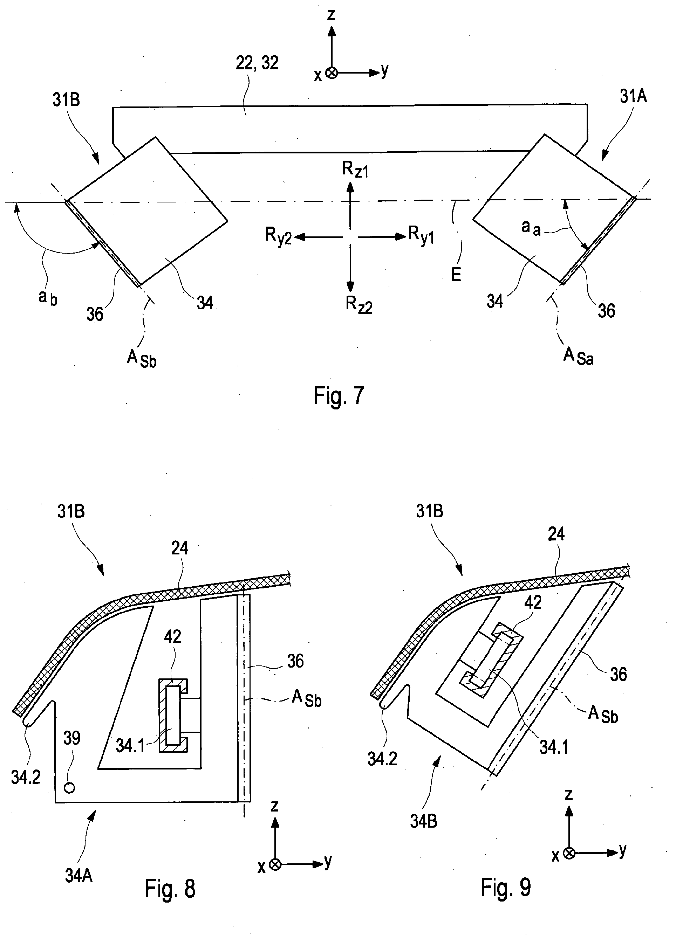

Wie aus Fig. 7 bis 9 weiter ersichtlich ist, sind die Neigungswinkel aₐ, a_{b} der Schwenkachsen A_{Sa}, A_{Sb} zur gemeinsamen Ebene E jeweils in einem Wertebereich größer als 0° und kleiner als 180° vorgegeben. Die Schwenkachsen A_{Sa}, A_{Sb} zwischen den benachbarten Gliederelementen 34, 34A, 34B sind an die Gegebenheiten im Fahrzeug, insbesondere an den zur Verfügung stehenden Bauraum für das abgelegte Verdeck 20 angepasst. So weist eine in Fig. 7 dargestellte erste Schenkachse Asa zwischen zwei benachbarten Gliederelementen 34 der ersten Gliederkette 31A, welche über ein Scharnier 36 verbunden sind, beispielsweise einen Wert von ca. 45° auf. Die gegen die erste Schenkachse A_{Sa} geneigte zweite Schwenkachse A_{Sb} zwischen zwei benachbarten Gliederelemente 34 der zweiten Gliederkette 31B, welche über ein Scharnier 36 verbunden sind, weist beispielsweise einen Wert von ca. 135° auf.

Eine in Fig. 8 dargestellte zweite Schenkachse A_{Sb} zwischen zwei benachbarten Gliederelemente 34 der zweiten Gliederkette 31B, welche über ein Scharnier 36 verbunden sind, weist beispielsweise einen Wert von ca. 90° auf. Die korrespondierende nicht dargestellte erste Schenkachse A_{Sa} zwischen zwei benachbarten Gliederelementen 34 der ersten Gliederkette 31A weist dann ebenfalls einen Wert von ca. 90° auf. Eine in Fig. 9 dargestellte zweite Schenkachse A_{Sb} zwischen zwei benachbarten Gliederelementen 34 der zweiten Gliederkette 31B, welche über ein Scharnier 36 verbunden sind, weist beispielsweise einen Wert von ca. 60° auf. Die korrespondierende nicht dargestellte erste Schenkachse A_{Sa} zwischen zwei benachbarten Gliederelemente 34 der ersten Gliederkette 31A weist dann einen Wert von ca. 120° auf.

Wie aus Fig. 7 bis 9 weiter ersichtlich ist, können die einzelnen Gliederelemente 34, 34A, 34B beliebige Formen aufweisen. Zudem können die einzelnen Gliederelemente 34, 34A, 34B der jeweiligen Gliederkette 31A, 31B gleiche oder unterschiedliche Abmessungen und/oder Formen aufweisen. So können beispielsweise die ersten Gliederelemente 34, 34A, 34B 34 der jeweiligen Gliederkette 31A, 31B, welche mit der Querverbindung 32 verbunden sind, eine andere Form und/oder andere Abmessungen als die anderen Gliederelemente 34, 34A, 34B aufweisen. Die in Fig. 7 dargestellten Gliederelemente 34 weisen beispielsweise einen rautenförmigen Querschnitt auf. Die in Fig. 8 und 9 dargestellten Gliederelemente 34A, 34B weisen beispielsweise unterschiedliche trapezförmige Querschnitte auf.

Wie aus Fig. 1 bis 3 weiter ersichtlich ist, umfasst die Führung 40 im dargestellten Ausführungsbeispiel einen lasttragenden Endabschnitt 42 und einen Verbindungsabschnitt 44, welcher eine Kurvenbahn für die korrespondierende Gliederkette 31A, 31B zwischen dem lasttragenden Endabschnitt 42 und der Ablage 46 vorgibt. Im dargestellten Ausführungsbeispiel sind der lasttragende Endabschnitt 42, der Verbindungsabschnitt 44 und die Ablage 46 jeweils als Führungsschienen ausgeführt, welche innerhalb der Gliederelemente 34, 34A, 34B angeordnet sind. Alternativ können der lasttragende Endabschnitt 42, der Verbindungsabschnitt 44 und die Ablage 46 jeweils als Führungsschienen ausgeführt werden, welche die Gliederelemente 34, 34A, 34B aufnehmen. Des Weiferen sind beliebige Kombinationen vorstellbar. So kann beispielsweise der lasttragende Endabschnitt 42 innerhalb der Gliederelemente 34, 34A, 34B angeordnet werden und der, Verbindungsabschnitt 44 und die Ablage 46 können die Gliederelemente 34, 34A, 34B aufnehmen. Wie aus Fig. 8 und 9 weiter ersichtlich ist, weisen die Gliederelemente 34A, 34B im dargestellten Ausführungsbeispiel jeweils mindestens ein Führungselement 34.1 auf, welches vor dem Verlassen der Führung 40 im lasttragenden Endabschnitt 42 geführt ist. Bei dem in Fig. 8 dargestellten Gliederelement 34A ist das Führungselement 34.1 beispielsweise als Noppen ausgeführt, welcher in dem als Führungsschiene ausgeführten lasttragenden Endabschnitt 42 geführt ist. Bei dem in Fig. 9 dargestellten Gliederelement 34B ist das Führungselement 34.1 beispielsweise als Rolle ausgeführt, welche in dem als Führungsschiene ausgeführten lasttragenden Endabschnitt 42 abrollt. Zudem weist die Führung 40 mindestens ein mit einem nicht näher dargestellten Antrieb gekoppeltes Antriebselement auf, welches die jeweilige Gliederkette 31A, 31B bewegt. Das mindestens eine Antriebselement kann beispielsweise als Zugseil 39 oder Zahnrad oder Reibrad oder Schneckenrad oder Gurt ausgeführt werden.

Wie aus Fig. 8 und 9 weiter ersichtlich ist, ist an den Gliederelementen 34A, 34B jeweils eine Scheibendichtung 34.2 mit einem Aufnahmeschlitz angeordnet, in welchen ein freier Rand einer Seitenscheibe einfahren kann. Zudem schließt im Gebrauchszustand ein Verdeckstoff 24 die Gliederelemente 34A, 34B nach oben ab.

Ausführungsformen der Erfindung stellen eine freitragende Schub- und/oder Zugvorrichtung für ein Fahrzeugverdeck mit zwei Gliederketten zur Verfügung, welche sich im entspannten bzw. flexiblen Zustand aufrollen und/oder einfach in einer Ablage verstauen lassen.

### BEZUGSZEICHENLISTE

- 1: Fahrzeug
- 2: Dachholm
- 4: Windschutzscheibe
- 20: Verdeck
- 22: vorderer Verdeckabschnitt
- 24: Verdeckstoff
- 26: hinterer Verdeckabschnitt
- 30: Schub- und/oder Zugvorrichtung
- 31A, 31B: Gliederkette
- 32: Querverbindung
- 34, 34A, 34B: Gliederelement
- 34.1: Führungselement
- 34.2: Scheibendichtung
- 36: Gelenk
- 36A: Scharnier
- 36B: Kugelgelenk
- 38: Führungsstruktur
- 38.1: erste Führungskontur
- 38.2: zweite Führungskontur
- 39: Zugseil
- 40: Führung
- 42: lasttragender Endabschnitt
- 44: Verbindungsabschnitt (Kurvenbahn)
- 46: Ablage
- Rₓ₁, Rₓ₂, R_{y1}, R_{y2}, R_{z1}, R_{z2}: Bewegungsrichtung
- A_{Sa}, A_{Sb}: Schwenkachse
- aₐ, a_{b}: Neigungswinkel
- E: gemeinsame Ebene
- A: Abstand
- x: Fahrzeuglängsrichtung
- y: Fahrzeugquerrichtung
- z: Fahrzeughochrichtung

## Patentansprüche

1. Schub- und/oder Zugvorrichtung (30) für ein Fahrzeugverdeck (20), mit zwei Gliederketten (31A, 31B), welche jeweils mehrere Gliederelemente (34, 34A, 34B) aufweisen und mit einem vorgegebenen Abstand (A) zu einander verlaufen, wobei die Gliederketten (31A, 31B) jeweils an einem Ende in einer Führung (40) geführt sind, welche eine Bewegungsrichtung (Rₓ₁, Rₓ₂) und den Abstand (A) der Gliederketten (31A, 31B) zueinander vorgeben, und am anderen Ende über eine Querverbindung (32) miteinander verbunden sind, so dass die Gliederketten (31A, 31B) beim Verlassen der Führung (40) in einer gemeinsamen Ebene (E) verlaufen, wobei zwei benachbarte Gliederelemente (34, 34A, 34B) der Gliederketten (31A, 31B) jeweils über ein Gelenk (36, 36A, 36B) beweglich miteinander verbunden sind, so dass zumindest ein Teil der Gliederelemente (34, 34A, 34B) beim Einfahren der Gliederketten (31A, 31B) in die jeweilige Führung (40) in einer korrespondierenden Ablage (46) abgelegt sind, und wobei die benachbarten Gliederelemente (34, 34A, 34B) beim Verlassen der jeweiligen Führung (40) an einander anliegen und sich gegen einander abstützen, **dadurch gekennzeichnet, dass** Schwenkachsen (A_{Sa}, A_{Sb}) zwischen zwei benachbarten Gliederelementen (34, 34A, 34B) der jeweiligen Gliederkette (31A, 31B) einen vorgegebenen Neigungswinkel (aₐ, a_{b}) zu der gemeinsamen Ebene (E) aufweisen, wobei die Schwenkachsen (A_{Sa}, A_{Sb}) der beiden Gliederketten (31A, 31B) gegeneinander geneigt sind, so dass die Gliederketten (31A, 31B) freitragend in die vorgegebene Bewegungsrichtung (Rₓ₁, Rₓ₂) verlaufen und sich gegenseitig gegen andere Bewegungsrichtungen (R_{y1}, R_{y2}, R_{z1}, R_{z2}) blockieren.

2. Schub- und/oder Zugvorrichtung nach Anspruch 1, **dadurch gekennzeichnet, dass** die Neigungswinkel (aₐ, a_{b}) der Schwenkachsen (A_{Sa}, A_{Sb}) zur gemeinsamen Ebene (E) jeweils in einem Wertebereich größer als 0° und kleiner als 180° vorgegeben sind.

3. Schub- und/oder Zugvorrichtung nach Anspruch 1 oder 2, **dadurch gekennzeichnet, dass** das Gelenk (36) als Scharnier (36A) mit einer fest vorgegebenen Schwenkachse (A_{Sa}, A_{Sb}) oder als Kugelgelenk (36B) mit variablen Schwenkachsen ausgeführt ist.

4. Schub- und/oder Zugvorrichtung nach Anspruch 3, **dadurch gekennzeichnet, dass** die über ein Kugelgelenk (36B) verbundenen benachbarten Gliederelemente (34) Führungskonturen (38.1, 38.2) aufweisen, welche die benachbarten Gliederelemente (34) beim Verlassen der jeweiligen Führung (40) gegeneinander abstützen.

5. Schub- und/oder Zugvorrichtung nach Anspruch 4, **dadurch gekennzeichnet, dass** eine erste Führungskontur (38.1) als Vertiefung und eine zweite Führungskontur (38.2) als Erhöhung ausgeführt ist.

6. Schub- und/oder Zugvorrichtung nach einem der Ansprüche 1 bis 5, **dadurch gekennzeichnet, dass** die Führung (40) mindestens ein mit einem Antrieb gekoppeltes Antriebselement aufweist, welches die jeweilige Gliederkette (31A, 31B) bewegt.

7. Schub- und/oder Zugvorrichtung nach Anspruch 6, **dadurch gekennzeichnet, dass** das mindestens eine Antriebselemente als Zugseil (39) oder Zahnrad oder Reibrad oder Schneckenrad oder Gurt ausgeführt ist.

8. Schub- und/oder Zugvorrichtung nach einem der Ansprüche 1 bis 6, **dadurch gekennzeichnet, dass** die Führung (40) einen lasttragenden Endabschnitt (42) und einen Verbindungsabschnitt (44) umfasst, welcher eine Kurvenbahn für die korrespondierende Gliederkette (31A, 31B) zwischen dem lasttragenden Endabschnitt (42) und der Ablage (46) vorgibt.

9. Schub- und/oder Zugvorrichtung nach Anspruch 8, **dadurch gekennzeichnet, dass** der lasttragende Endabschnitt (42) und/oder der Verbindungsabschnitt (44) und/oder die Ablage (46) als Führungsschienen ausgeführt sind, welche innerhalb der Gliederelemente (34, 34A, 34B) angeordnet sind.

10. Schub- und/oder Zugvorrichtung nach Anspruch 8 oder 9, **dadurch gekennzeichnet, dass** der lasttragende Endabschnitt (42) und/oder der Verbindungsabschnitt (42) und/oder die Ablage (46) als Führungsschienen ausgeführt sind, welche die Gliederelemente (34, 34A, 34B) aufnehmen.

11. Schub- und/oder Zugvorrichtung nach einem der Ansprüche 8 bis 10, **dadurch gekennzeichnet, dass** die Gliederelemente (34, 34A, 34B) jeweils mindestens ein Führungselement (34.1) aufweisen, welches vor dem Verlassen der Führung (40) im lasttragenden Endabschnitt (42) geführt ist.

12. Schub- und/oder Zugvorrichtung nach einem der Ansprüche 1 bis 11, **dadurch gekennzeichnet, dass** die einzelnen Gliederelemente (34, 34A, 34B) der jeweiligen Gliederkette (31A, 31B) gleiche oder unterschiedliche Abmessungen und/oder Formen aufweisen.

13. Verdeck (20) für ein öffnungsfähiges Fahrzeugdach, welches mehrere Verdeckabschnitte und eine Schub- und/oder Zugvorrichtung (30) aufweist, welche die Verdeckabschnitte von einer Gebrauchslage in eine Nichtgebrauchslage bewegt, **dadurch gekennzeichnet, dass** die Schub- und/oder Zugvorrichtung (30) nach zumindest einem der Ansprüche 1 bis 12 ausgeführt ist.

14. Verdeck nach Anspruch 13, **dadurch gekennzeichnet, dass** ein vorderer Verdeckabschnitt (22) als starre Dachspitze ausgeführt ist, welche über mindestens ein Mittelteil mit einem hinteren starren Verdeckabschnitt (26) verbunden ist, welcher eine Heckscheibe aufweist.

15. Verdeck nach Anspruch 14, **dadurch gekennzeichnet, dass** der vordere Verdeckabschnitt (22) die Querverbindung (32) zwischen den beiden Gliederketten (31A, 31B) ausbildet.

16. Verdeck nach Anspruch 14 oder 15, **dadurch gekennzeichnet, dass** der vorderer Verdeckabschnitt (22) in der Nichtgebrauchslage oberhalb oder unterhalb des hinteren starren Verdeckabschnitts (26) angeordnet ist.

17. Verdeck nach einem der Ansprüche 13 bis 16, **dadurch gekennzeichnet, dass** an den Gliederelementen (34A, 34B) jeweils eine Scheibendichtung (34.2) mit einem Aufnahmeschlitz angeordnet ist, in welchen ein freier Rand einer Seitenscheibe einfahrbar ist.

## Claims

1. Pushing and pulling device (30) for a vehicle foldable top (20), comprising two link chains (31A, 31B), which are respectively provided with a plurality of link elements (34, 34A, 34B), and which extend at a predetermined distance (A) to one another, wherein the link chains (31A, 31B) are respectively guided at one end in a guide (40) which predetermines a movement direction (Rₓ₁, Rₓ₂) and the mutual distance (A) of the link chains (31A, 31B) to each other, and at the other end are connected to each other via a transverse connection (32), so that the link chains (31A, 31B) upon exiting the guide (40) extend in a joint plane (E), wherein two adjacent link elements (34, 34A, 34B) of the link chains (31A, 31B) are movably connected to each other via a joint (36, 36A, 36B), so that at least a portion of the link elements (34, 34A, 34B) when the link chains (31A, 31B) enter into the respective guide (40) are stored in a corresponding storage area (46), and wherein the adjacent link elements (34, 34A, 34B) upon exiting the respective guide (40) lie against each other and support each other, **characterised in that** pivot axes (A_{Sa}, A_{Sb}) have between two adjacent link elements (34, 34A, 34B) of the respective link chain (31A, 31B) a predetermined inclination angle (aₐ, a_{b}) to the joint plane (E), wherein the pivot axes (A_{Sa}, A_{Sb}) of both link chains (31A, 31B) are inclined relative to each other so that the link chains (31A, 31B) extend in a self-supporting manner in the predetermined movement direction (Rₓ₁, Rₓ₂) and mutually block each other against other movement directions (R_{y1}, R_{y2}, R_{z1}, R_{z2}).

2. Pushing and/or pulling device according to claim 1, **characterised in that** the inclination angles (aₐ, a_{b}) of the pivot axes (A_{Sa}, A_{Sb}) to the joint plane (E) are predetermined in a value range that is greater than 0° and less than 180°.

3. Pushing and/or pulling device according to claim 1 or 2, **characterised in that** the link (36) is designed as a hinge (36A) with a fixed pivot axis (A_{Sa}, A_{Sb}) or as a ball joint (36B) with variable pivot axes.

4. Pushing and/or pulling device according to claim 3, **characterised in that** the adjacent link elements (34) that are connected via a ball joint (36B) are provided with guide contours (38.1, 38.2), which mutually support the adjacent link elements (34) against each other upon exiting the respective guide (40).

5. Pushing and/or pulling device according to claim 4, **characterised in that** a first guide contour (38.1) is designed as a recess and a second guide contour (38.2) is designed as an elevation.

6. Pushing and/or pulling device according to any of claims 1 to 5, **characterised in that** the guide (40) is provided with at least one drive element that is coupled to a drive which moves the respective link chain (31A, 31B).

7. Pushing and/or pulling device according to claim 6, **characterised in that** the at least one drive element is designed as a traction cable (39) or a toothed wheel or a friction wheel or a worm wheel or a belt.

8. Pushing and/or pulling device according to any of claims 1 to 6, **characterised in that** the guide (40) comprises a load-bearing end section (42) and a connecting section (44), which determines a curved path for the corresponding link chain (31A, 31B) between the load-bearing end section (42) and the storage area (46).

9. Pushing and/or pulling device according to claim 8, **characterised in that** the load-bearing end section (42) and/or the connecting section (44) and/or the storage area (46) are designed as guide rails, which are arranged inside the link elements (34, 34A, 34B).

10. Pushing and/or pulling device according to claim 8 or 9, **characterised in that** the load-bearing end section (42) and/or the connection section (42) and/or the storage area (46) are designed as guide rails which receive the link elements (34, 34A, 34B).

11. Pushing and/or pulling device according to any of claims 8 to 10, **characterised in that** the link elements (34, 34A, 34B) are respectively provided with at least one guide element (34.1), which is guided prior to exiting the guide (40) in the load-bearing end section (42).

12. Pushing and/or pulling device according to any of claims 1 to 11, **characterised in that** the individual link elements (34, 34A, 34B) of the respective link chain (31A, 31B) have the same or different dimensions and/or forms.

13. Folding top (20) for an openable vehicle roof, which has a plurality of folding top sections and a pushing and/or pulling device (30), which moves the folding top sections from a usage position to a non-usage position, **characterised in that** the pushing and/or pulling device (30) is designed according to at least one of claims 1 to 12.

14. Folding top according to claim 13, **characterised in that** a front folding top section (22) is designed as a rigid roof top which is connected by at least one intermediate part to a rear rigid folding section (26) which is provided with a rear window.

15. Folding top according to claim 14, **characterised in that** the front folding top section (22) forms the transverse connection (32) between the two link chains (31A, 31B).

16. Folding top according to claim 14 or 15, **characterised in that** the front folding top section (22) is arranged in the non-usage position above or below the rear rigid folding top section (26).

17. Folding top according to any of claims 13 to 16, **characterised in that** on the link elements (34A, 34B) a window seal (34.2) with a receiving slot is arranged respectively, in which a free edge of a side window can be inserted.

## Revendications

1. Dispositif pour pousser et/ou tirer (30) destiné à une capote de véhicule (20), avec deux chaînes à maillons (31A, 31B), qui présentent chacune plusieurs maillons (34, 34A, 34B) et qui s'étendent avec une distance prédéterminée (A) l'une par rapport à l'autre, dans lequel les chaînes à maillons (31A, 31B) sont guidées chacune à une extrémité dans un guide (40), lequel prescrit un sens de déplacement (Rₓ₁, Rₓ₂) et la distance (A) des chaînes à maillons (31A, 31B) l'une par rapport à l'autre, et sont réunies à l'autre extrémité par l'intermédiaire d'une liaison transversale (32), de telle sorte que les chaînes à maillons (31A, 31B) s'étendent dans un plan commun (E) lorsqu'elles quittent le guide (40), dans lequel deux maillons voisins (34, 34A, 34B) des chaînes à maillons (31A, 31B) sont réunis de façon mobile à chaque fois par l'intermédiaire d'une articulation (36, 36A, 36B), de telle sorte qu'au moins une partie des maillons (34, 34A, 34B) est déposée dans un logement correspondant (46) lorsque les chaînes à maillons (31A, 31B) sont introduites dans le guide respectif (40), et dans lequel les maillons voisins (34, 34A, 34B) sont adjacents les uns aux autres et se soutiennent les uns contre les autres lorsqu'ils quittent le guide respectif (40), **caractérisé en ce que** des axes de pivotement (A_{Sa}, A_{Sb}) entre deux maillons voisins (34, 34A, 34B) de la chaîne à maillons (31A, 31B) respective présentent un angle d'inclinaison prédéterminé (aₐ, a_{b}) par rapport au plan commun (E), dans lequel les axes de pivotement (A_{Sa}, A_{Sb}) des deux chaînes à maillons (31A, 31B) sont inclinés l'un par rapport à l'autre, de telle sorte que les chaînes à maillons (31A, 31B) s'étendent de manière non soutenue dans le sens de déplacement (Rₓ₁, Rₓ₂) prédéterminé et se bloquent mutuellement contre d'autres sens de déplacement (R_{y1}, R_{y2}, R_{z1}, R_{z2}).

2. Dispositif pour pousser et/ou tirer selon la revendication 1, **caractérisé en ce que** les angles d'inclinaison (aₐ, a_{b}) des axes de pivotement (A_{Sa}, A_{Sb}) par rapport au plan commun (E) sont prédéterminés à chaque fois dans une plage de valeurs supérieures à 0° et inférieures à 180°.

3. Dispositif pour pousser et/ou tirer selon la revendication 1 ou 2, **caractérisé en ce que** l'articulation (36) est réalisée comme une charnière (36A) avec un axe de pivotement (A_{Sa}, A_{Sb}) prédéterminé fixe ou comme une articulation sphérique (36B) avec des axes de pivotement variables.

4. Dispositif pour pousser et/ou tirer selon la revendication 3, **caractérisé en ce que** les maillons voisins (34) reliés par l'intermédiaire d'une articulation sphérique (36B) présentent des contours de guidage (38.1, 38.2) qui soutiennent les maillons voisins (34) les uns contre les autres lorsqu'ils quittent le guide (40) respectif.

5. Dispositif pour pousser et/ou tirer selon la revendication 4, **caractérisé en ce qu'**un premier contour de guidage (38.1) est réalisé comme un creux et un deuxième contour de guidage (38.2) comme une bosse.

6. Dispositif pour pousser et/ou tirer selon l'une quelconque des revendications 1 à 5, **caractérisé en ce que** le guide (40) présente au moins un élément d'entraînement qui est couplé à un entraînement et qui déplace la chaîne à maillons (31A, 31B) respective.

7. Dispositif pour pousser et/ou tirer selon la revendication 6, **caractérisé en ce que** l'au moins un élément d'entraînement est réalisé comme un câble de traction (39) ou une roue dentée ou un galet de friction ou une roue tangente ou une courroie.

8. Dispositif pour pousser et/ou tirer selon l'une quelconque des revendications 1 à 6, **caractérisé en ce que** le guide (40) comprend un tronçon terminal (42) porteur de charge et un tronçon de liaison (44) qui définit une trajectoire courbe pour la chaîne à maillons (31A, 31B) correspondante entre le tronçon terminal (42) porteur de charge et le logement (46).

9. Dispositif pour pousser et/ou tirer selon la revendication 8, **caractérisé en ce que** le tronçon terminal (42) porteur de charge et/ou le tronçon de liaison (44) et/ou le logement (46) sont réalisés comme des rails de guidage qui sont agencés à l'intérieur des maillons (34, 34A, 34B).

10. Dispositif pour pousser et/ou tirer selon la revendication 8 ou 9, **caractérisé en ce que** le tronçon terminal (42) porteur de charge et/ou le tronçon de liaison (42) et/ou le logement (46) sont réalisés comme des rails de guidage qui reçoivent les maillons (34, 34A, 34B).

11. Dispositif pour pousser et/ou tirer selon l'une quelconque des revendications 8 à 10, **caractérisé en ce que** les maillons (34, 34A, 34B) présentent chacun au moins un élément de guidage (34.1) qui est guidé dans le tronçon terminal (42) porteur de charge avant de quitter le guide (40).

12. Dispositif pour pousser et/ou tirer selon l'une quelconque des revendications 1 à 11, **caractérisé en ce que** les maillons individuels (34, 34A, 34B) de la chaîne à maillons (31A, 31B) respective présentent des dimensions et/ou des formes identiques ou différentes.

13. Capote (20) pour un toit de véhicule ouvrant, qui présente plusieurs parties de capote et un dispositif pour pousser et/ou tirer (30) qui déplace les parties de capote d'une position d'usage à une position de non-usage, **caractérisée en ce que** le dispositif pour pousser et/ou tirer (30) est réalisé selon au moins l'une quelconque des revendications 1 à 12.

14. Capote selon la revendication 13, **caractérisée en ce qu'**une partie de capote (22) avant est réalisée comme un sommet de toit rigide qui est relié par l'intermédiaire d'au moins une partie centrale à une partie de capote (26) arrière rigide qui présente une lunette arrière.

15. Capote selon la revendication 14, **caractérisée en ce que** la partie de capote (22) avant constitue la liaison transversale (32) entre les deux chaînes à maillons (31A, 31B).

16. Capote selon la revendication 14 ou 15, **caractérisée en ce que**, dans la position de non-usage, la partie de capote (22) avant est agencée au-dessus ou au-dessous de la partie de capote (26) arrière rigide.

17. Capote selon l'une quelconque des revendications 13 à 16, **caractérisée en ce qu'**au niveau des maillons (34A, 34B) est agencé à chaque fois un joint de vitre (34.2) avec une fente de réception dans laquelle peut être introduit un bord libre d'une vitre latérale.
